# EUROPEAN PATENT SPECIFICATION

(11) **EP 4 390 598 B1**
(45) Date of publication and mention of the grant of the patent: **07.01.2026**
(21) Application number: 22216503.7
(22) Date of filing: 23.12.2022
(51) Int. Cl.: G05D 1/698, G06Q 10/08, G05D 105/80, G05D 107/70, G05D 109/18

(54) **STEERING AUTOMATED VEHICLES IN A DESIGNATED AREA USING MOBILE GROUND ROBOTS CONFIGURED AS MOVABLE SENSORS**
STEUERUNG AUTOMATISIERTER FAHRZEUGE IN EINEM BESTIMMTEN BEREICH MITTELS SENSORROBOTER KONFIGURIERT ALS BEWEGLICHE SENSOREN
GESTION DE VÉHICULES AUTOMATISÉS DANS UNE ZONE DÉSIGNÉE GRÂCE À DES ROBOTS TERRESTRES CONFIGURÉS COMME CAPTEURS MOBILES

(43) Date of publication of application: 26.06.2024
(73) Proprietor: embotech AG, 8005 Zürich (CH)
(72) Inventor: Domahidi, Alexander, 8005 Zurich (CH); Hampp, Elias Lukas, 8005 Zurich (CH); Longo, Stefano, 8005 Zurich (CH)
(74) Representative: E. Blum & Co. AG

(56) References cited:
- EP-A2- 3 657 385
- US-A1- 2020 272 837
- US-A1- 2020 334 985
- US-A1- 2020 334 985
- US-B1- 10 311 731
- US-B1- 10 311 731
- SANNGOEN WANAYUTH ET AL: "Parking place inspection system utilizing a mobile robot with a laser range finder", SYSTEM INTEGRATION (SII), 2012 IEEE/SICE INTERNATIONAL SYMPOSIUM ON, IEEE, 16 December 2012 (2012-12-16), pages 55 - 60, XP032323437, ISBN: 978-1-4673-1496-1, DOI: 10.1109/SII.2012.6426967
- SANNGOEN WANAYUTH ET AL: "Parking place inspection system utilizing a mobile robot with a laser range finder", SYSTEM INTEGRATION (SII), 2012 IEEE/SICE INTERNATIONAL SYMPOSIUM ON, IEEE, 16 December 2012 (2012-12-16), pages 55 - 60, XP032323437, ISBN: 978-1-4673-1496-1, DOI: 10.1109/SII.2012.6426967

## Description

### TECHNICAL FIELD

The invention relates in general to the field of methods, systems, and computer program products, for steering automated vehicles in a designated area such as a car assembly plant or an industrial parking lot. In particular, it is directed to a method relying on sensor robots designed as ground vehicles moved across the designated area to sense the latter and generate corresponding detection signals. The method exploits such detection signals to update a configuration of this area and accordingly plan vehicle trajectories, for the automated vehicles to automatically drive to destination positions in this area.

### BACKGROUND

Industrial logistics management is often a complex task, which becomes even more difficult over time. This is particularly the case in the automotive industry. The global automotive logistics market is expected to grow significantly by 2028. But new challenges lie ahead, starting with those arising from the consequences of the coronavirus pandemic. Change management is another issue. A notorious challenge in the automotive industry is managing the transport of just-manufactured vehicles. The vehicles must continually be moved (e.g., from a production site to a loading area), which requires some optimization.

To date, vehicle relocation is normally performed by human operators. The advent of automated and autonomous vehicles makes it possible to consider automating the transport of such vehicles. However, this poses several challenges, especially when the vehicles to be transported are not sufficiently autonomous. Indeed, just-assembled vehicles may already have drive-by-wire capability, yet without being equipped with suitable sensors or being configured for autonomously driving. Therefore, new logistics solutions are needed to optimize vehicle transport logistics in designated areas such as industrial parking lots, indoor garages, and production plants.

US10311731B1 is directed to techniques for collecting information associated with a parking space. The approach relies on a self-propelled autonomous data machine (ADM) comprising one or more sensors. The one or more sensors may include a vision sensor and at least one other type of sensor. The ADM is navigated within a multi-level parking structure comprising at least one parking space for a vehicle. The ADM may be capable of navigating to the location near the parking space autonomously without direct manual control by a user.

Parking information pertaining to the parking space is then obtained via the one or more sensors. The parking information comprises at least one of the following: location of the parking space, size of the parking space, type or layout of the parking space, images of the parking space, the time when the parking space information was collected, and occupancy information for the parking space.

The parking information is transmitted to a remote computing system. The latter may be configured to display a floor of the multi-level parking structure which is occupied by the ADM. It may further display the parking information to a user along with information for structures in an environment of the parking space.

The parking information may include license plate information regarding a vehicle occupying the parking space when the vehicle occupies the parking space. If necessary, the license plate information may be compared with a white list, black list, or exclusion list of vehicles. If necessary, information about a threat associated with the license plate information may be displayed.

US2020334985A1 concerns techniques for operating an autonomous driving vehicle (ADV); The underlying method comprises, in response to a request to park an ADV in a parking lot, accessing a remote server over a vehicle-to-everything (V2X) link to obtain a list of one or more parking spaces that appear to be available in the parking lot. The method then generates a route to navigate through the parking spaces of the list based on a parking lot map associated with the parking lot (e.g., a shortest route that goes through the parking spaces that appear to be available) and drives the ADV according to the route to locate one of the parking spaces that is available at a point in time. Finally, in response to locating an available parking space, the method plans a parking path to park the ADV into the available parking space.

The remote server may periodically receive signals from a plurality of sensors disposed within the parking lot, the signals indicating which parking space is available. For example, the parking lot is managed by a central system and is equipped with one or more sensors that are configured to sense and detect which of the parking spaces of the parking lot are available. In response to locating a first parking space indicated in the list, the method may determine whether the located parking space is indeed available based on sensor data obtained from one or more sensors mounted on the ADV, wherein the parking path is planned to park the ADV into the first parking space if the first parking space is indeed available based on the sensor data.

Use can be made of a high-definition (HD) map of the parking lot. The ADV may perform a perception process to verify whether the parking space is available based on sensor data obtained from one or more sensors mounted on the vehicle. Alternatively, both a method relied on perception and a method using centralized server method may be utilized in parallel to find the first parking space available in the parking lot.

The article "Parking place inspection system utilizing a mobile robot with a laser range finder," (S. Wanayuth et al., 2012 IEEE/SICE International Symposium on System Integration (SII), Fukuoka, Japan, 2012, pp. 55-60, doi: 10.1109/SII.2012.6426967) concerns techniques of inspection to detect vehicles in parking lots. The authors propose a mobile robot surveillance equipped with a laser scanning device to directly detect parked vehicles, where the mobile robot performs patrolling in the parking place.

EP3657385A2 discloses methods of operating a system for vehicle detection within a vehicle parking facility. The system includes one or more vehicle detection sensors positioned at the vehicle parking facility. The method comprises: (i) determining a measure of available parking spaces based on sensor data received from the one or more vehicle detection sensors; (ii) receiving, via a communication module from an image capture device, image data representing an occupancy state of discrete parking spaces within the vehicle parking facility; (iii) determining, based on the image data representing the occupancy state, that a subject vehicle occupying a target parking space additionally occupies an area external to the target parking space and, in response, determining a number of unusable parking spaces; and (iv) generating and transmitting, to a display, parking space inventory data based on the measure of available parking spaces and the determined number of unusable parking spaces.

US2020272837A1 discloses a vehicle parking data collection system, which comprises an image preprocessing system configured to produce a tiled, orthorectified orthomosaic of images corresponding to a parking area from a plurality of overlapping images of the parking area. The system further includes a vehicle identification system configured to identify a vehicle in a parking spot of the parking area shown in one or more of the images. The system further includes a change detection system configured to detect a vehicle change in the parking spot of the parking area in the images collected at different times. The system may for instance rely on an aerial vehicle (e.g., an unmanned aerial vehicle) equipped with an imaging system and optics, which passes over the parking area to collect aerial imagery. The unmanned aerial vehicle is capable of moving above the parking area.

### SUMMARY

According to a first aspect, the present invention is embodied as a method of enabling the steering automated vehicles in a designated area. The method comprises the following steps, which are preferably performed by a central control unit (CCU). First, one or more movable sensors are instructed to move across the designated area for the movable sensors to sense at least a part of the designated area and generate corresponding detection signals. A configuration of the designated area is then updated based on the generated detection signals. This configuration includes a list of objects and respective (e.g., 2D) positions in the designated area, where the objects include the one or more vehicles and possibly other objects, such as the one or more movable sensors. In turn, the updated configuration makes it possible to plan one or more vehicle trajectories (for one or more vehicles of the automated vehicles) from one or more current positions of the one or more vehicles to one or more destination positions for the one or more vehicles in the designated area. The one or more vehicle trajectories are then transmitted to respective ones of the automated vehicles, to allow them to automatically drive to the one or more destination positions.

The proposed solution makes it possible to automatically relocate vehicles in a designated area. Unlike solutions based on static sensors, the present approach relies on movable sensors, which reduces the number of required sensors and allows the sensor positions to be finely tuned in accordance with the logistic problem to be solved.

In embodiments, the movable sensors are robots designed as ground vehicles. In that case, instructing to move the movable sensors includes instructing the robots to drive along respective paths, for the robots to sense the designated area (or a part thereof) and generate the corresponding detection signals. This makes it possible to position the sensor robots most judiciously, with a view to suitably updating the area configuration. Note, such paths are typically determined (e.g., by the CCU) according to a logistics goal, which is preferably devised based on last known positions of the automated vehicles, prior to being transmitted to the robots.

The robots may possibly be instructed to drive along said paths up to respective target positions, for the robots to sense the designated area (or a part thereof) once having reached their respective target positions. In that case, the exploited signals are generated from static positions, which makes it easier (e.g., for the CCU) to reconcile the information obtained from the various sensor robots.

In variants, or in addition, the robots are instructed to drive along said paths and continually sense the designated area along said paths. This approach typically requires a smaller number of sensor robots, all things being otherwise equal.

In all cases, the area configuration can be repeatedly updated based on detection signals that are continually generated by the movable sensors as the vehicles automatically drive to their destination positions. This makes it possible to check the vehicle relocations in real-time. In particular, repeatedly updating the area configuration makes it possible to check for potential collisions between the automated vehicles and other objects in the designated area (i.e., objects of the list of objects of the repeatedly updated configuration).

In embodiments, the method further comprises identifying features, which include vehicle features of the automated vehicles, based on the generated detection signals, whereby said configuration is updated based on the identified features. The vehicle features may for instance include underside features (i.e., corresponding to underbodies) of the automated vehicles, starting with wheels of the automated vehicles. In that case, the aforementioned configuration can be updated by determining positions of the automated vehicles based on positions determined from the underside features identified.

In preferred embodiments, the sensor robots have a form factor allowing them to pass under frames of the automated vehicles. So, one or more of the paths determined for the robots may be paths going under a frame of one or more of the automated vehicles. In that case, instructing to move the movable sensors causes one or more of the robots to drive under a vehicle frame.

In embodiments, planning the vehicle trajectories comprises determining vehicle motion paths for the automated vehicles to reach their destination positions. Motions of the vehicle along the determined motion paths may then be orchestrated to obtain the one or more vehicle trajectories. Note, such vehicle motions may possibly be orchestrated for the resulting vehicle trajectories to be at least partly concomitant, in the interest of time optimization.

For example, the designated area may include or consist of a parking lot, which may for instance include more than 100 parking places. In that case, both the destination positions and the current positions of the automated vehicles may correspond to respective parking places of the parking lot. Interestingly, the robots can be dimensioned so as to be able to drive between vehicles as parked in parallel ones of the parking places according to nominal parking positions. Moreover, the sensor robots are preferably dimensioned to be able to pass under the vehicle frames, as evoked earlier.

Another aspect of the invention concerns a system for enabling the steering of automated vehicles in a designated area. The system comprises movable sensors and a CCU, which is configured to perform steps as described earlier in reference to the present methods. That is, the CCU is designed to: instruct to move the movable sensors across the designated area, for the sensors to sense at least a part of the designated area and generate corresponding detection signals; update a configuration of the designated area, based on the generated detection signals; plan one or more vehicle trajectories from one or more current positions to one or more destination positions in the designated area, based on its updated configuration; and instruct to transmit the one or more vehicle trajectories planned to respective ones of the automated vehicles for the latter to automatically drive to the one or more destination positions.

As evoked above, the movable sensors are preferably designed as ground vehicle robots, which are configured to drive along respective one or more paths across the designated area, where the ground vehicles preferably are at least partly autonomous. As said, the robots may have a form factor allowing them to go under frames of the automated vehicles. Moreover, the robots are preferably designed as holonomic drive systems, i.e., enabling movement in any direction, which comes in particularly handy to avoid obstacles, especially where the automated vehicles are densely packed.

In embodiments, each robot has a chassis supporting one or more batteries, four electrical motors powered by the one or more batteries, four omnidirectional wheels coupled to respective ones of the electrical motors, a Lidar sensor mounted on top of the chassis, and a GPS antenna. In addition, the chassis supports processing means, which include a main processing unit, a Lidar processing unit connected to the lidar sensor, and a GPS processing unit connected to the GPS antenna. Moreover, the chassis supports a radio receiver with an antenna for wireless data communication with the CCU, where the radio receiver is connected to the main processing unit. Preferably, a maximal lateral dimension of each of the robots is between 200 mm and 500 mm, while a vertical dimension of each of the robots is between 60 and 150 mm.

A final aspect of the invention concerns a computer program product for enabling the steering of automated vehicles in a designated area. The computer program product comprises a computer readable storage medium having program instructions embodied therewith. The program instructions are executable by processing means of one or more computerized units (e.g., forming part of a CCU) to cause the one or more computerized units to perform steps according to the present methods.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 schematically represents a top view of an industrial parking lot, where sensor robots (designed as ground vehicles) are moved across the parking lot to sense specific portions thereof and generate corresponding detection signals. Such detection signals are exploited to update a configuration of the parking lot and accordingly plan a vehicle trajectory, for a given automated vehicle to automatically drive to a destination position in the parking lot, according to embodiments;
FIGS. 2A - 2C similarly depict a top view of an industrial parking lot, where the sensor robots continually sense portions of the parking lot as they move along predetermined paths, some of them passing under vehicle frames (FIG. 2A). The detection signals obtained from the sensor robots are again exploited to update the configuration of the parking lot and accordingly plan vehicle trajectories for front-row vehicles (FIG. 2B), for them to automatically drive to destination positions in a loading area (FIG. 2C), as in embodiments;
FIGS. 3A, 3B, and 3C, respectively show a 3D view, a side view, and a front view, of a sensor robot designed as a partly autonomous, compact holonomic drive system, according to embodiments;
FIG. 4 is a diagram schematically illustrating selected components of a system according to embodiments, where the system includes a central control unit communicating with a fleet of movable sensors (designed as ground vehicles) to orchestrate relocations of automated vehicles;
FIG. 5 is a 3D view illustrating a sensing robot dispatched to a specific location of a designated area to sense its environment, with a view to identifying car features and car positions, and accordingly updating a configuration of the designated area, as in embodiments;
FIG. 6 is a flowchart illustrating high-level steps of a method of steering automated vehicles thanks to movable sensors designed a ground vehicles, according to embodiments;
FIG. 7 schematically represents a general-purpose computerized system (e.g., forming part of a central control unit), suited for implementing one or more method steps as involved in embodiments of the invention;
FIG. 8 is a diagram illustrating the high-level architecture of an automated vehicle, as involved in embodiments; and

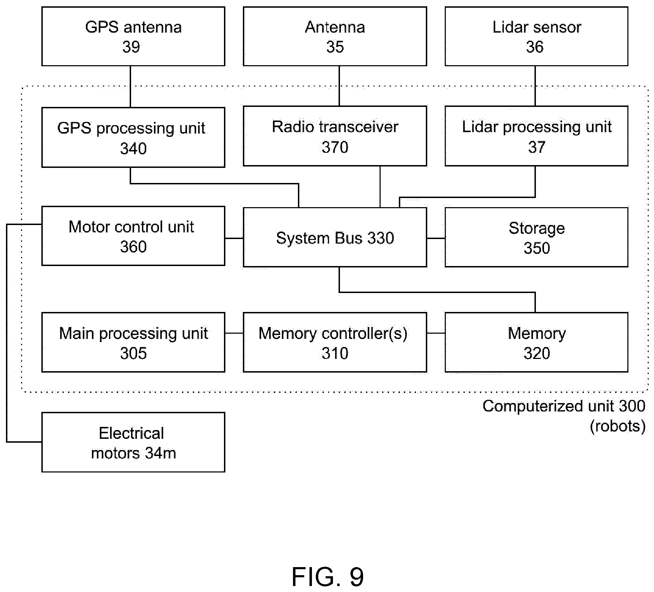

FIG. 9 is a diagram illustrating the high-level architecture of a sensor robot designed as a ground vehicle, as in preferred embodiments of the invention.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Systems, methods, and computer program products embodying the present invention will now be described, by way of non-limiting examples.

### DETAILED DESCRIPTION OF EMBODIMENTS OF THE INVENTION

The following description is structured as follows. General embodiments and high-level variants are described in section 1. Section 2 addresses technical implementation details, while Section 3 aggregates final remarks.

### 1. General embodiments and high-level variants

### 1.1 Essential aspects of the present methods

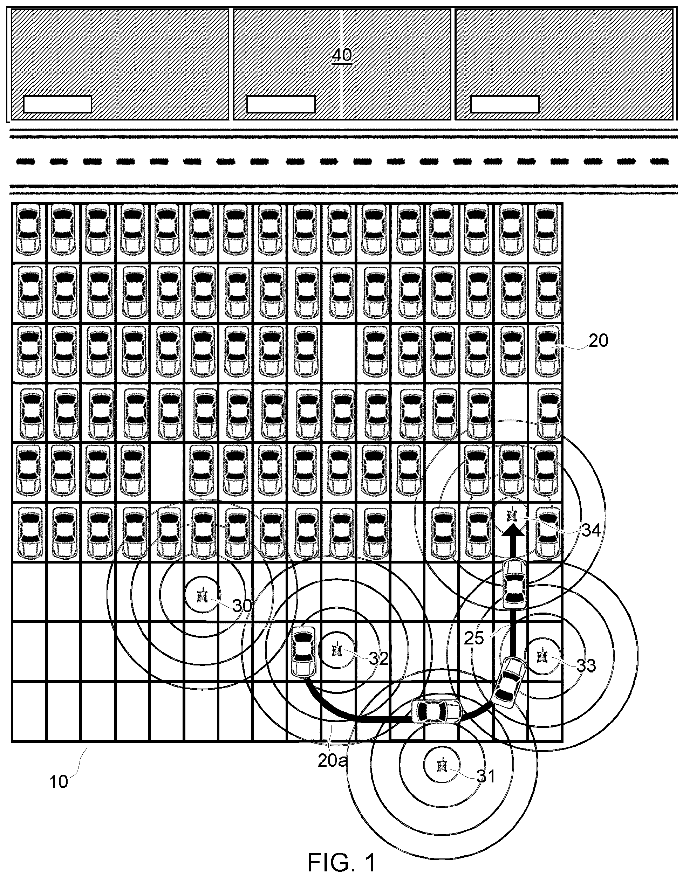

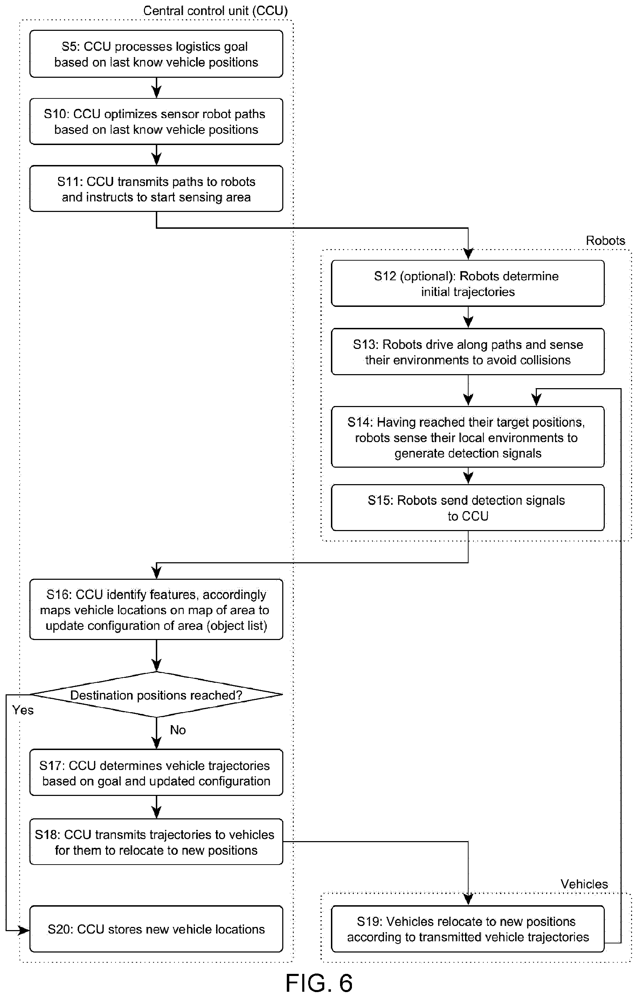

A first aspect of the invention is now described in detail in reference to FIGS. 1 - 6. This aspect concerns a method of steering automated vehicles 20 in a designated area 10. Note, this method and its variants are collectively referred to as the "present methods" in this document. All references S*n* refer to methods steps of the flowcharts of FIG. 6, while numeral references pertain to devices, components, and concepts, as involved in embodiments of the present invention.

The method relies on one or more movable sensors 30 - 34 to update a configuration of a designated area 10 and accordingly plan trajectories for one or more automated vehicles 20, for them to automatically drive to a destination in this area 10. The designated area 10 may for instance be an indoor area (e.g., a production plant, a garage, a warehouse) or an outdoor area (e.g., an industrial parking lot). In general, the present methods and systems involve at least one movable sensor 30 - 34 and at least one automated vehicle 20. However, the following description mostly refer to a plurality of movable sensors 30 - 34 and a plurality of automated vehicles 20, as involved in typical applications. The following describes essential steps of the proposed method, which are preferably performed by (or triggered from) a central control unit (CCU) 100.

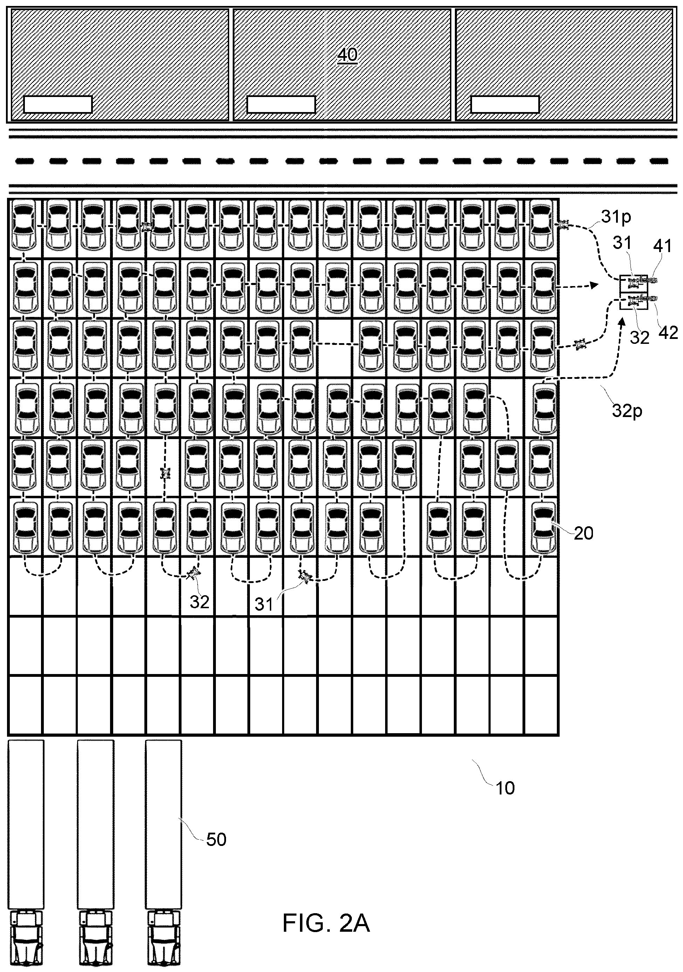

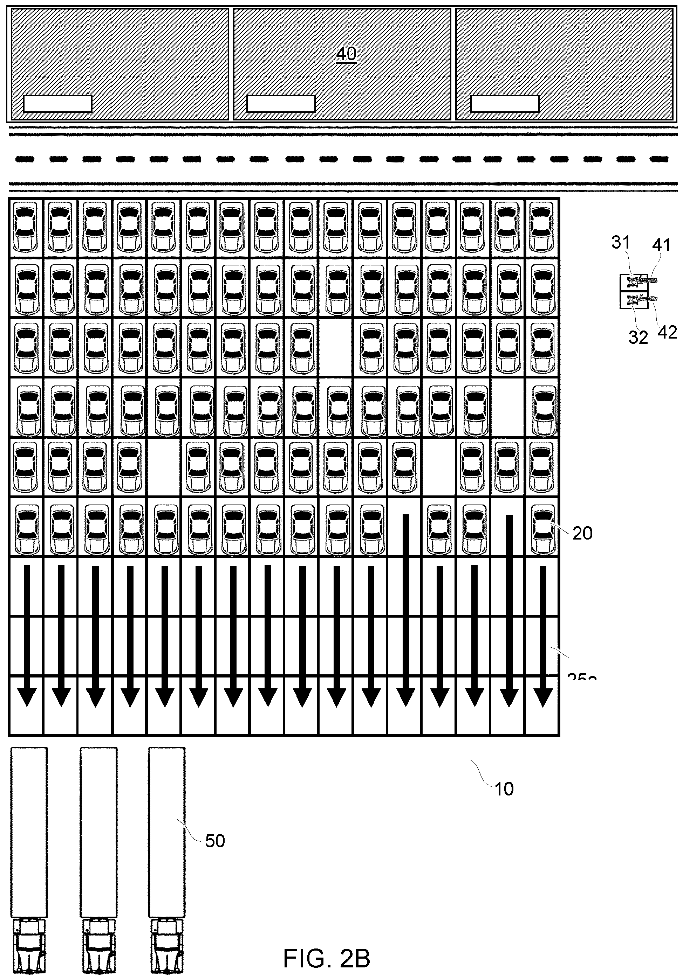

First, the movable sensors 30 - 34 are instructed S11 to move across the designated area 10, e.g., so as to reach target locations in this area (i.e., static locations, as assumed in FIG. 1) or continually move along predefined paths (as assumed in FIG. 2A). In both cases, the aim is for the movable sensors 30 - 34 to sense S13 the designated area 10 (or local portions thereof) and generate corresponding detection signals. The detection signals generated by the sensors encode information as to the sensed area 10 (or parts thereof).

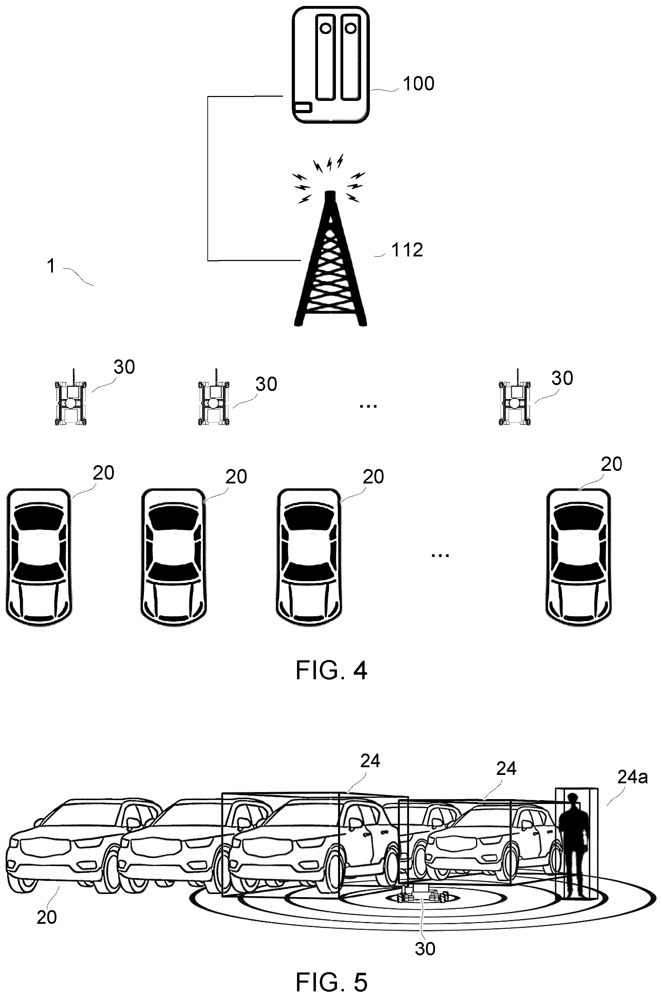

Next, a configuration of the designated area 10 is updated, based on the generated detection signals. The area configuration is some digital representation of the area; this representation does not necessarily require a map of the area. A minima, this configuration includes an object list with respective positions (e.g., 2D positions) of objects, which include the automated vehicles. Additional objects may possibly be listed, such as movable sensors and pedestrians, if any. In addition, this configuration may include descriptors of bounding volumes (e.g., bounding boxes, see FIG. 5), associated with the object positions, with a view to detecting and preventing collisions, for instance. Note, the detection signals are preferably transmitted to the CCU 100 (i.e., a server) for it to accordingly update the area configuration. In variants, the sensors may locally update this configuration, e.g., in a peer-to-peer manner. In further variants, the configuration is updated collaboratively by the movable sensors 30 - 34 and the CCU 100, based on detection signals obtained by the movable sensors.

In turn, updating the area configuration makes it possible to plan S17 vehicle trajectories 25, 25a, by exploiting information contained in the updated configuration. Such vehicle trajectories 25, 25a extend from current positions (normally static) of the vehicles 20 to destination positions (normally static too) in the designated area 10; the destination positions differ from the current positions of the automated vehicles 20. The planned vehicle trajectories 25, 25a are eventually transmitted S18 to respective ones of the automated vehicles 20 for the latter to automatically drive to their destination positions.

### 1.2 Comments to and advantages of the proposed method

Comments are in order. The movable sensors 30 - 34 may sense any object in the area, e.g., vehicles 20, other movable sensors 30 - 34, pedestrians, or other obstacles, in the area 10. In particular, the movable sensors 30 - 34 sense the current positions of the vehicles 20 and provide corresponding information to the CCU. In addition, the method may attempt to reconcile this information with previously known positions of the vehicles, with a view to updating the area configuration.

A preferred approach is one where the control unit 100 already stores an object list including a list of the automated vehicles and their current positions, then updates S16 this object list thanks to detection signals received S15 from the sensors, as assumed in FIG. 6. In order to achieve this, the control unit 100 may for instance instruct the movable sensors 30 - 34 to move across the area 10 to reach given target positions, which can be determined in accordance with a logistics goal and last known positions of the automated vehicles 20. Once having achieved their target positions, the movable sensors 30 - 34 sense the area and generate corresponding detection signals that they transmit to the CCU 100 for it to update the area configuration, as assumed in FIG. 1. In addition, the movable sensors 30 - 34 may also sense their immediate environment while moving to their target positions, in order to avoid obstacles. This is advantageous where the movable sensors are embodied as ground vehicles, which can be (at least partly) autonomous, as in embodiments discussed below. In variants, the sensors may continually sense the area 10 as they move across it, in a continual manner, as assumed in FIGS. 2A - 2C.

In all cases, the control unit and/or the movable sensors 30 - 34 process the detection signals generated by the sensors 30 - 34 to derive precise positions of vehicles 20 and other objects, if any, so that suitable trajectories may eventually be determined (e.g., in accordance with a logistics goal) and transmitted to the vehicles 20 for them to reach their new positions. Note, both the current and destination positions of the vehicles 20 are normally fixed (i.e., static) positions.

Updating the area configuration amounts to updating the current positions of sensed objects, something that may involve (but does not necessarily require) a cartographic representation (i.e., a map) of the designated area 10. As said, the configuration update may, in principle, be done by the movable sensors 30 - 34 and/or processing means of the CCU 100. Still, the CCU 100 is in a better position to reconcile partial information obtained from the sensors 30 - 34. Thus, the area configuration update is preferably managed entirely by the CCU 100 based on the detection signals received from the movable sensors.

The terminologies "autonomous" and "automated" are sometimes used as synonyms. In general, "autonomous", "semi-autonomous", and "partly autonomous", refer to concepts that involves some self-governance of machines, whereby such machines are capable of sensing their environment to safely move therein, avoiding obstacles and collisions with other objects, whether static or in motion. In this document, the terminology "autonomous" is to be understood in a broad sense. I.e., an autonomous device is a device that is automated, and therefore at least partly autonomous, though not necessarily fully autonomous. That is, this device incorporates automation to move (e.g., drive) across the area 10, through typically with external inputs (e.g., from the CCU 100).

In the present context, the automated vehicles 20 benefit from some automation, such that they can automatically drive from one location to another, without necessarily being autonomous, i.e., without necessarily being capable of sensing their environments and without necessarily being aware of their locations. A minima, the automated system of such vehicle is capable of taking full control of the vehicle for the latter to start, accelerate, brake, steer, and stop, so as to be able to move from one location to another. The automated vehicles 20 are ground vehicles, typically autonomous cars, which can have various levels of autonomy. In principle, such vehicles 20 can be of any type, e.g., cars, vans, transit buses, motorcoaches, trucks, lorries, or any other types of ground vehicles that may benefit from automation. In typical embodiments, though, the automated vehicles are production cars, vans, electric vehicles, or the likes, which benefit from automatic driving and are at least level 2 (hands off), possibly level 3 (eyes off), level 4 (mind off), or level 5 (steering wheel optional), according to the system developed by SAE International (formerly named the Society of Automotive Engineers).

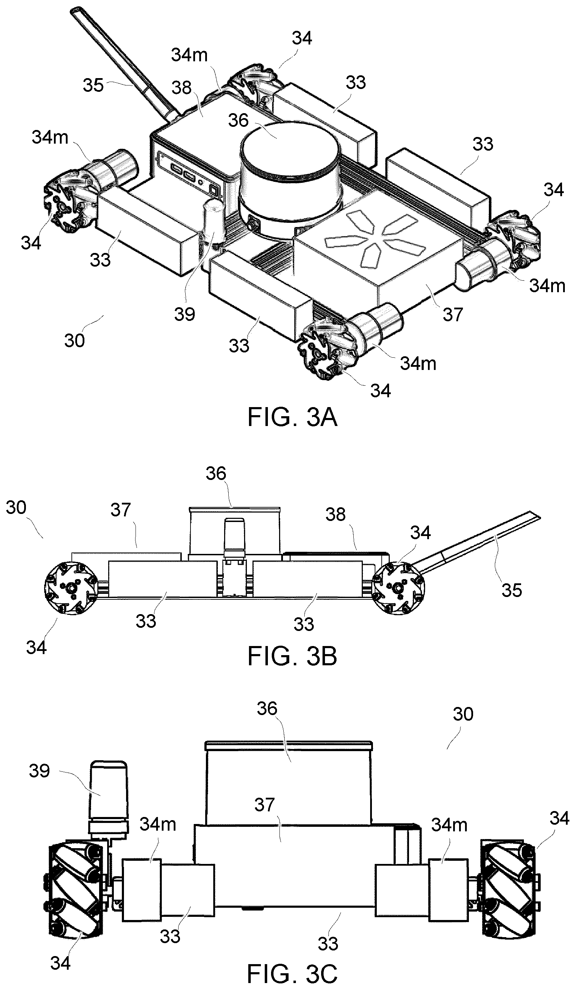

The movable sensors 30 - 34 are unmanned devices that preferably are at least partly autonomous. They can be designed as ground vehicles, aerial vehicles (drones), or devices suspended on a continuous moving cable (like cable cars), for example. In particular, they may be embodied as ground vehicles that are automated to drive along predefined pathways, using artificial aid, e.g., magnetic, or coloured strips. Preferably, though, they are designed as ground vehicles 30 - 34 that are at least partly autonomous, so as to avoid potential collisions with other objects, as assumed in FIGS. 3A - 3C. So, motion planning can be used to steer the sensor robots too.

Preferably, the movable sensors 30 - 34 are location-aware devices (e.g., having GPS capability), which are more preferably equipped with a Lidar system 36, 37, or a similar system (i.e., based on 3D laser scanning), to allow the vehicles 20 and other objects to be mapped S16 on the designated area. The mapping data can be reconciled by the CCU 100. The goal is to determine accurate positions of such objects (including the current positions of the vehicles 20, if necessary), prior to determining the vehicle trajectories 25, 25a.

Such trajectories 25, 25a typically aim at solving a logistic problem. Thus, the CCU 100 may have to solve S5 an optimization problem, prior to determining the vehicle trajectories. Note, the determined vehicle trajectories 25, 25a are time-dependent motions, as opposed to mere motion paths. I.e., in the present context, trajectories consist of motion paths, augmented with timestamps (or relative time durations), whereby each vehicle 20 is instructed to drive along a certain path with a certain speed (which can vary along the path), starting at a certain time. The motions of the vehicles may have to be orchestrated, especially in applications where the vehicles are agnostic to their environments and can therefore not autonomously avoid obstacles and collisions. In comparison, the sensor robots 30 - 34 may have a higher level of autonomy. I.e., the sensor robots may be capable of avoiding obstacles, unlike the vehicles 20. Preferred implementations of such robots are discussed later in detail in respect of another aspect of the invention.

The proposed solution makes it possible to automatically relocate vehicles 20 in a designated area 10, such as a parking lot of a car production plant. Such areas can be large and accommodate hundreds to thousands of vehicles. The vehicles 20 need continually be relocated (e.g., to continually load trucks), which requires fleet logistic optimization. The logistics of relocation of vehicles within industrial parking lots is a complex problem. One possible way to solve this problem is to rely on static sensors. This, however, requires a large number of sensors, substantial bandwidth, throughputs, and processing power. Plus, static locations may be suboptimal. In comparison, relying on movable sensors (possibly a single movable sensor) reduces the number of required sensors and allows the sensor positions to be finely tuned in accordance with the logistic problem to be solved.

### 1.3 Particularly preferred embodiments of the proposed method

### 1.3.1. Sensor robots designed as (partly) autonomous ground vehicles

All this is now described in detail, in reference to particular embodiments of the invention. To start with, the robots are preferably designed as ground vehicles 20, as assumed in FIGS. 3A - 3C, and 4. Upon being instructed S11 to drive S12 along respective paths, the robots come to sense S13 the designated area 10 (i.e., at least the parts of the area corresponding to the environments of the robots) and generate corresponding detection signals, whether at the end of the path (i.e., once having reached target positions) and/or along their respective paths. As said, the robots 30 - 34 may, in embodiments, only benefit from automatic driving capability, e.g., relying on artificial aids, such as coloured or magnetic strips. In that case, there is no need to plan trajectories for the robots; they just need be instructed to move along their respective paths.

In preferred variants, however, the sensor robots do not rely on external aid. Still, they may well have limited computational capability and a rather limited level of self-governance. Therefore, their trajectories are preferably precomputed by and transmitted from the CCU 100. In other variants, the robots 30 - 34 are sufficiently autonomous to determine their trajectories themselves, yet based on paths precomputed and transmitted by the CCU 100. Optimal input paths may be provided to the robots based on the last known locations of the vehicles 20 in the designated area 10. To that aim, the robots 30 - 34 are preferably equipped with radio receivers, as in embodiments described later.

### 1.3.2. Static sensing (FIG. 1)

In the example of FIG. 1, the designated area 10 consist of a parking lot, which includes 144 parking places, partly occupied by cars 20 that have been recently assembled in the nearby production plant 40. The objective in this example is quite simple: a passenger car 20a must be brought closer to the other vehicles, to free up space in the southern part of the parking lot. This logistics goal has been devised S5 by a CCU 100 (not shown in FIG. 1), based on last known positions of the automated vehicles 20. Having set this logistics goal, the CCU 100 determines S10 optimal target positions for the sensor robots, as well as paths (or trajectories) for the sensor robots 30 - 34 to reach such target positions. The sensor robots 30 - 34 are then instructed S11 to drive S12 from their current locations along the transmitted paths to reach their respective target positions. Having reached such target positions, the robots start sensing S13 their respective environments, corresponding to respective parts of the designated area 10, see also FIG. 5. This causes the robots to generate detection signals, which they transmit S15 to the CCU 100. This, in turn, allows the CCU 100 to update S16 the area configuration. Based on the updated configuration, the CCU 100 determines S17 an optimal trajectory 25 for the outcast vehicle 20a and transmits S18 this trajectory to the vehicle 20a, for the latter to reach its destination position. Although blind and unaware of its environment, the vehicle 20a can drive along the path corresponding to the transmitted trajectory, and in accordance with timing information contained in this trajectory, e.g., thanks to the drive-by-wire system 360 of the vehicle 20.

In this example, the robots sense the area 10 at fixed positions (the target positions). Advantageously, the area configuration can be repeatedly updated, thanks to detection signals continually generated by the sensor robots 30 - 34 (still in their target positions) as the automated vehicle 20a automatically drives its destination position. This makes it possible for the CCU 100 to continually check for potential collisions. That is, the movable sensors continually sense the area 10 as the vehicle 20a moves, to make sure that no obstacle (starting with pedestrians) interferes with the vehicle 20a. In the unlikely event that an obstacle is detected, which would lead to a collision, a new trajectory (e.g., an emergency stop) can be quickly computed and transmitted by the CCU 100 to the vehicle 20a.

### 1.3.3. Continual sensing (FIGS. 2A - 2C)

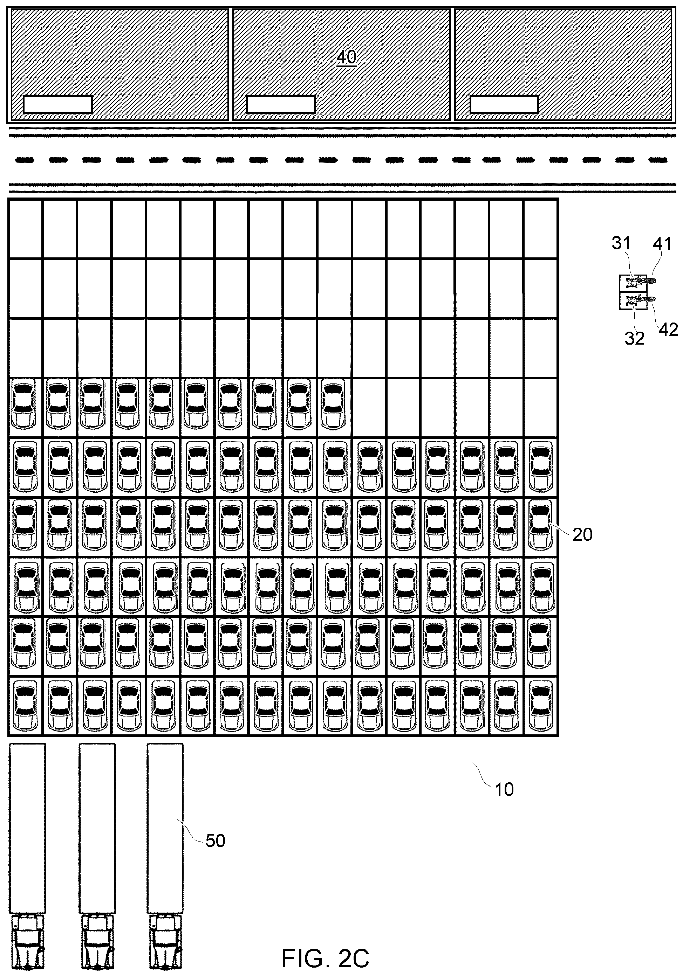

FIGS. 2A - 2C illustrates a different scenario, where several vehicles 20 are to be relocated closer to a loading area, in the southern region of the parking lot. The goal is to be able to load car carrier trailers 50 more efficiently with selected vehicles 20. Again, this logistics goal can be initially devised in accordance with the last known positions of the vehicles concerned. This example assumes that fewer robots (namely two) 31, 32 are available. Here, the robots 31, 32 are instructed to drive along respective paths 31p, 32p, starting from their respective charging stations 41, 42 (the robots are assumed to be electrical vehicles), for the robots to sense S13 the designated area 10 while driving along their respective paths 31p, 32p. That is, the robots sense their environments along their paths, to repeatedly generate detection signals that are transmitted to the CCU 100 (not shown in FIGS. 2A - 2C). They may further keep on sensing the area 10 once having reached their target positions, if any, and/or while returning to their charging stations 41, 42, if necessary. In turn, the detection signals are processed by the CCU 100, which reconciles the partial information encoded in such signals to update the area configuration. This way, the CCU 100 can determine optimal trajectories 25a (see FIG. B), in accordance with the logistics goal, and transmit such trajectories to the vehicles 20. The latter may then drive in accordance with the transmitted trajectories to reach their destination positions, see FIG. 2C. Not only this makes it possible to bring the cars 20 closer to the trucks 50 but, in addition, this frees up some place in the northern region of the parking lot, with a view to parking newly manufactured vehicles coming from the production site 40, if necessary.

Again, the paths 31p, 32p can initially be optimized according to some logistics goal, itself devised based on last known positions of the automated vehicles 20, prior to being transmitted to the sensor robots 30 - 34. As noted earlier, the CCU 100 may determine trajectories instead of mere paths 31p, 32p, should the robots 31, 32 not be sufficiently autonomous. It is anyway advantageous to precompute such trajectories at the CCU, to spare the robots the computational effort. In less preferred variants, the CCU 100 merely transmits optimal paths to the robots 31, 32, which determine S12 their respective trajectories themselves, in accordance with the optimal paths, and then start driving S12 according to the trajectories determined.

Even where pre-computed trajectories are transmitted to the robots 30 - 34, the latter may be sufficiently autonomous to detect obstacles and stop, if necessary. For example, in the scenarios of FIGS. 1 and 2A - 2C, the robots 30 - 34 can be designed to sufficiently autonomous to avoid obstacles and collisions with objects (whether vehicles 20, other robots, or other things), along their paths. I.e., the robots drive at least partly autonomously along paths (or in accordance with trajectories) as initially planned by the CCU 100 or the robots themselves, and may possibly stop or, even, locally deviate from the initial paths (or trajectories) to avoid obstacles.

### 1.3.4. Feature identification (computer vision, FIG. 5)

As illustrated in FIG. 5, the area configuration is preferably updated based on features identified thanks to the detection signals obtained by the robots 30 - 34. That is, the present methods may further identify S13, S16 features 24, 24a, which notably include vehicle features 24 of the automated vehicles 20, based on the detection signals generated by the robots. The area configuration is accordingly updated based on the identified features. I.e., the current positions of the automated vehicles and other objects, if any, are updated and mapped S16 on the designated area 10, based on the features 24 identified.

In principle, the feature identification can be performed at the robots or the CCU 100. Still, as noted earlier, the configuration update is preferably performed by the CCU 100, based on detection signals obtained from the robots 30 - 34, it being reminded that this unit 100 may have to reconcile partial information obtained from the robots. With this in mind, and given the computational resources that are typically required to perform feature identification, this task is preferably performed by the CCU 100, based on detection signals transmitted by the sensor robots 30 - 34. In less preferred variants, the robots 20 - 34 may locally perform the feature identification and transmit corresponding signals to the CCU. Even, the sensor robots may update a partial area configuration, based on the locally sensed environments, and the resulting local configurations may subsequently be transmitted to and reconciled by the CCU 100. Such tasks, however, requires substantial computing power at the sensing robots, hence the advantage of performing these tasks at the CCU.

The present methods may advantageously seek to identify underside features 24 of the vehicles 20, i.e., features corresponding to underbodies of the automated vehicles 20, starting with wheels of the vehicles, as such features are fairly easy to infer using standard cognitive models in computer vision. Various techniques known in the field of self-driving cars can usefully be applied in the present context, albeit in respect of detection signals generated by sensing robots instead of autonomous cars. This way, the positions of the automated vehicles 20 may be accurately determined based on the determined positions of the underside features identified S13.

### 1.3.5. Robot paths (or trajectories)

Relying on underside features, such as wheels, is judicious in a context where the robots are designed as ground vehicles, which can be made compact and have a centre of gravity close to the ground. In that respect, referring to FIG. 2A, the sensor robots 30 - 34 are preferably designed so as to have a form factor allowing them to pass under frames of the automated vehicles 20. I.e., the robots 30 - 34 are dimensioned so as to be able to pass under the underbody of the vehicles 20. As a result, the paths 31p, 32p can be optimized so as to go under the frames of the automated vehicles 20, if necessary. Thus, upon being instructed S11 to move along their paths, the sensor robots 30 - 34 may drive S12 under the vehicle frames, if necessary. Note, this makes it easier to detect features related to wheels, such that the vehicle positions can be determined more accurately.

In addition to being able to pass under vehicle underbodies, the robots 30 - 34 may also be dimensioned so as to be able to drive S12 between vehicles 20 as parked in parallel parking places, at least if the vehicles are parked according to nominal (i.e., acceptable) parking positions.

### 1.3.6. Vehicle trajectories

The logistics scenarios assumed in FIGS. 1 - 2C are purposely simple, in the interest of the clarity and conciseness of the depictions and their descriptions. In reality, however, relocation logistics of automated cars can be much more sophisticated. For the same reasons, the capacity of the depicted parking lots is restricted to 144 parking places, whereas real industrial parking lots can sometimes include hundreds to thousands of parking places. Typical applications may require between 10 and 100 sensor robots, where a single robot is typically used to sense 4 to 12 parking place in a static position. This number remains essentially unchanged when the sensor robots are embodied as flying drones, instead of ground vehicles. An advantage of using battery-powered ground vehicles, though, is that they have a longer endurance, so that a lower number of unit devices is effectively required.

In the examples discussed in reference to FIGS. 1 - 2C, both the destination positions and the current positions of the automated vehicles 20 correspond to respective parking places of a parking lot. More generally, though, the initial and/or destination positions may possibly be outside the parking lot, e.g., in a separate loading area or an indoor area. Indoor areas may rely on a mesh of cable car-like devices, in which sensors are suspended on a continuous moving cable.

More sophisticated relocation logistics may be contemplated, where several vehicles may have to be concomitantly relocated, which requires orchestrating the vehicle trajectories. To that aim, the CCU 100 may first determine motion paths for the automated vehicles 20 to reach their destination positions and then orchestrate motions of the vehicle along the determined motion paths to obtain the vehicle trajectories 25, 25a. This requires another optimization, typically performed by the CCU 100. This will be useful where the vehicles 20 are not sufficiently self-aware of their environment. The same may actually be done for the robots 30 - 34, if necessary. However, the predetermined paths will likely be collision-free. Plus, the sensor robots can be made sufficiently autonomous to prevent collisions.

For completeness, the CCU 100 may seek to orchestrate the vehicle motions for the resulting vehicle trajectories 25, 25a to be at least partly concomitant. This effectively decreases the relocation time durations and contributes to improve the overall logistics.

Preferably, the vehicle trajectories 25, 25a are planned for time periods during which the sensor robots are static. E.g., the vehicle trajectories 25, 25a are planned so that the vehicles 20 start driving to their new positions only after all of the robots 30 - 34 have reached their target positions and sensed their environments. This makes it possible to fully decouple motions of the robots 30 - 34 and the vehicles 20, and makes it easier to obtain collision-free trajectories 25, 25a for the vehicles 20, it being reminded that such vehicles may have no collision-avoidance capability.

Still, the sensor robots 30 - 34 may further sense the area 10 as the vehicles start moving, in order to check for potential collisions, as assumed in the scenario of FIG. 1. In that case, the area configuration is repeatedly updated (e.g., continually updated), based on detection signals that are repeatedly generated by the sensor robots 30 - 34 as the automated vehicles 20 drive to their destination positions. This allows the CCU 100 to continually check for potential collisions based on the continually updated configuration. I.e., the movable sensors continually scan the area as the vehicles move, to make sure that no obstacle interferes with the vehicles starting with pedestrians. In the unlikely event that an obstacle is detected, which would lead to a collision, a new trajectory e.g., an emergency stop can be transmitted to the vehicle 20 concerned.

### 1.3.7. Preferred flow (FIG. 6)

A preferred flow is shown in FIG. 6. Steps S5, S10, S11, S16 - S18, and S20, are performed by the CCU 100, while steps S12 - S15 are performed by the sensor robots. Step S19 is performed by the vehicles 20. At step S5, the CCU analyses a logistics goal (possibly instructed by a human operator) in accordance with the last known positions of the vehicles 20. At step S10, the CCU optimizes paths (or trajectories) for the robots, based on the last known positions of the vehicles, and in accordance with the logistics goal. At step S11, the CCU transmits the optimized paths (or trajectories) to robots and instructs them to start sensing the area 10. Note, this last instruction may be implicit.

Step S12 is optional; it concerns cases where mere motion paths are transmitted to the robots. In that case, the sensor robots determine their initial trajectories, upon receiving their respective paths. The robots start driving along their respective paths at step S13, in accordance with the determined trajectories. They continually sense their environment to detect and advert potential collisions, while driving along their paths. Having reached S14 their target positions, the robots 30 - 34 may again sense their environment and accordingly generate detection signals that are transmitted S15 to the CCU for processing, as in the scenario illustrated in FIG. 1. The CCU then reconciles S16 information captured in the various detection signals received to update the area configuration. Alternatively, the robots may continually generate detection signals along their paths and send such signals to the CCU for processing S16, as described earlier in reference to FIGS. 2A - 2C.

At step S17, the CCU determines optimal vehicle trajectories, based on the logistics goal and the area configuration as updated last. Such trajectories are next transmitted S19 to the vehicles 20 for them to relocate S20 to their destination positions. Meanwhile, the robots keep on sensing S14 the area (i.e., the flow loops back to step S14), to continually generate detection signals and send S15 such signals to the CCU, which accordingly update S16 the area configuration. Having updated the area configuration anew, the CCU checks whether the vehicles 20 have reached their destination positions. If so, the CCU stores S20 the final vehicle positions. Else, the CCU updates S17 the vehicle trajectories, if necessary, to improve them or prevent collisions, and then transmit S18 the updated trajectories to the vehicles for them to accordingly modify S19 their current trajectories.

### 1.4. System for steering automated vehicles

### 1.4.1. High-level features

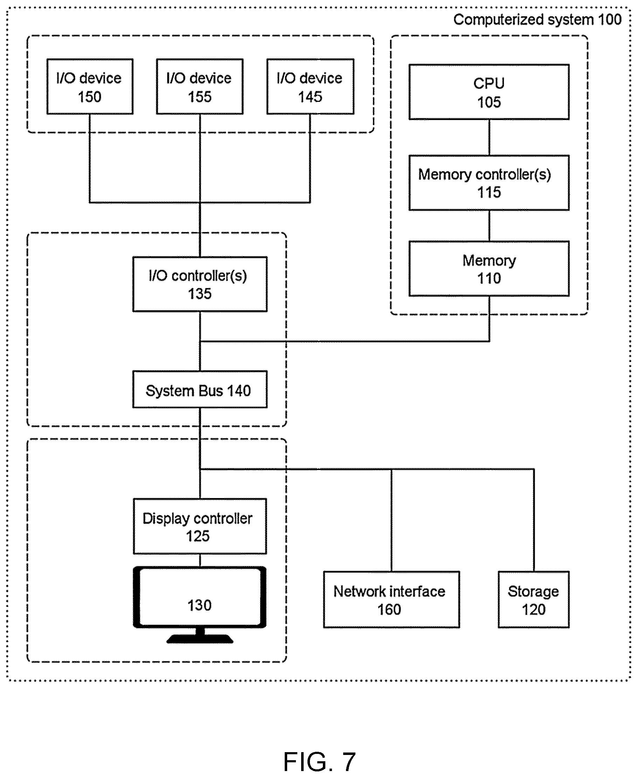

Another aspect of the invention is now described, which concerns a system 1 for steering automated vehicles 20 in a designated area 10. Essential features of the system 1 have already been described in reference to the present methods. Accordingly, such features are only briefly described in the following. The system 1 basically includes movable sensors 30 - 34 and a CCU 100, which typically includes one or more computerized units such as illustrated in FIG. 7.

Consistently with the present methods, the CCU 100 is configured to instruct S11 to move one or more movable sensors 30 - 34 across the designated area 10 for the movable sensors to sense S13 at least a part of the designated area and generate corresponding detection signals. This, in turn, allows the CCU to update the configuration of the designated area 10, based on the generated detection signals. The CCU is further configured to plan S17 one or more vehicle trajectories 25, 25a (i.e., from current positions to destination positions in the designated area 10), based on the updated configuration. Accordingly, the CCU can eventually instruct to transmit S18 the vehicle trajectories 25, 25a as planned to respective ones of the automated vehicles 20, so that the latter may automatically drive to their destination positions. The trajectories are wirelessly transmitted, using an antenna 112 (see FIG. 4), meaning that the vehicles are equipped with a radio receiver.

As noted earlier, this process may be iterated. E.g., the CCU 100 may receive S15 feedback from the sensors 30 - 34 as the vehicles 20 move S19. In principle, the CCU may possibly receive feedback from the vehicles 20 too, although the latter are preferably agnostic to their environments in typical applications. I.e., the automated vehicles 20 have limited autonomy.

### 1.4.2. Preferred sensor robot design

As said, the movable sensors 30 - 34 are preferably embodied as robots designed as ground vehicles 20, which are at least partly autonomous, as assumed in FIGS. 3A - 3C. The sensor robots 30 - 34 are accordingly configured to drive along respective paths across the designated area 10. The robots may possibly be configured to determine and recompute their respective trajectories, in accordance with paths communicated from the CCU 100. Preferably, however, such trajectories are precomputed at the CCU 100. Still, the robots may be sufficiently autonomous to avoid obstacles. In case an obstacle is detected, the robots 30 - 34 may for instance stop and transmit their current position, based on which the CCU 100 determines new trajectories for the robots to avoid the obstacles. As noted earlier, the robots may sense S13 the designated area 10 by continuously sensing their environments, with a view to identifying features (including vehicle features 24), to allow the current positions of the automated vehicles 20 to be updated. More generally, any identified object features may be used to update trajectories of both the robots and the vehicles, if necessary. For example, FIG. 5 shows a bounding box 24a corresponding to a detected pedestrian, in addition to bounding boxes 24 corresponding to detected cars.

As evoked earlier, the sensor robots 30 - 34 preferably have a form factor, which allows them to go under frames of the automated vehicles 20. In that case, the CCU 100 may optimize the motion paths 31p, 32p and possibly determine them as paths going under one or more vehicle frames. Moreover, this form factor may further allow the sensor robots to pass between the vehicles, at least if the latter are parked according to nominal positions in the parking places. In that respect, the maximal lateral dimension of each sensor robot 30 - 34 is preferably between 200 mm and 500 mm. The maximal vertical dimension shall preferably be between 60 and 150 mm. In the example of FIGS. 3A - 3C, the width of the depicted robot 30 is equal to 295 mm, its length is equal to 410 mm, and its height is 120 mm.

As further seen in FIGS. 3A - 3C, the robots 30 - 34 can advantageously be designed as holonomic drive systems. I.e., the robots 30 - 34 can be equipped with omnidirectional wheels 34. The wheels 34 may for instance be so-called omni wheels or Mecanum wheels. This way, the robots can move laterally without requiring conventional steering, which is handy when manoeuvring in narrow and/or shallow places, for example between vehicles or under vehicle frames. The robots are preferably electrical vehicles, which includes one or more batteries.

In the example of FIGS. 3A - 3C, the sensor robot 30 has a chassis supporting four independent batteries 33, four electrical motors 34m powered by respective batteries 33, four omnidirectional wheels 34 coupled to respective electrical motors 34m. The robot 30 is further equipped with a Lidar sensor 36, mounted on top of the chassis. It also includes a GPS antenna 39, as well as a radio antenna 35. The robot further comprises processing means 37, 38, which include a main processing unit 38 (including a GPS processing unit) and a Lidar processing unit 37, the latter connected to the lidar sensor 36. The GPS processing unit is connected to the GPS antenna. A radio receiver (not visible) is connected to the antenna 35 for wireless data communication with the CCU 100. The radio receiver is connected to the main processing unit. Like the vehicles 20, the robots 30 - 34 can be equipped with radio receivers, such that the CCU 100 may instruct to move the robots by radio transmitting predetermined paths or trajectories, as explained earlier. The Lidar sensors are used by the robots 30 - 34 to perform a 2D or 3D mapping of the area, i.e., to map surrounding features 24, 24a. Note, in the present context, it is normally sufficient to determine 2D positions of the identified objects.

Radio communications may be based on a wireless LAN (WLAN) standard or a long-term evolution (LTE) standard, the latter being better suited for large outdoor areas. With the GPS antenna 39 and the GPS processing unit, the robots have the possibility to localize themselves in the area 10, as well as the vehicles 20 and other objects, assuming the corresponding features are at the robots. The robots may for instance implement a differential GPS, to increase the accuracy of the calculated object positions. As the robots are preferably embodied as battery-powered vehicles, they have to be recharged from times to times, hence the need to orchestrate rotations of active robots. When passing or stationing under a car body, the Lidar system 36, 37 of a robot 30 - 34 can be used to scan S13, S14 the underside of the chassis, including wheels, of any other suitable vehicle feature, to make it possible to precisely determine the positions of the vehicles 20. Additional features of the sensor robots are discussed in Sect. 2.3.

### 1.5. Computer program products

Next, according to a final aspect, the invention is embodied as a computer program product for steering automated vehicles 20 in a designated area 10. The computer program product comprises a computer readable storage medium having program instructions embodied therewith. The program instructions are executable by one or more computerized units to cause such computerized units to perform steps as described earlier in reference to the present methods. Note, such instructions may possibly be performed at the CCU 100 only, jointly at the CCU 100 and the robot(s) 30 - 34, or at the robot(s) 30 - 34 only, e.g., in a peer-to-peer manner. Additional features of the computer program products are discussed in Sect. 3.

The above embodiments have been succinctly described in reference to the accompanying drawings and may accommodate a number of variants. Several combinations of the above features may be contemplated. Examples are given in the next section.

### 2. Specific embodiments, technical implementation details

### 2.1. Computer architecture of the central control unit (CCU) and computer program product

In embodiments, the method steps S5, S10, S11, S16 - S18, and S20, described earlier in reference to FIG. 6, are implemented in software, e.g., as one or more executable programs, executed by processing means of the CCU 100, which may include one or more computerized units. Any such computerized unit may generally have the architecture 100 shown in FIG. 7. The computerized system 100 involves one or more processors 105 and a memory 110 (meant to act as a main memory), coupled to a memory controller 115. The processors 105 are hardware devices for executing software, as loaded in the main memory of the system 100. The processors can be any custom made or commercially available processors; they may possibly include graphics processing units (GPUs), which can be leveraged to perform machine learning inferences, notably for computer vision-related tasks.

The memory 110 may include a combination of volatile memory elements (e.g., random access memory) and nonvolatile memory elements, e.g., solid-state devices. The software in memory may include one or more separate programs, each of which may for instance comprise an ordered listing of executable instructions for implementing logical functions. In the example of FIG. 7, the software loaded in the memory 110 includes methods described herein in accordance with exemplary embodiments and a suitable operating system (OS). The OS essentially controls the execution of other computer (application) programs and provides scheduling, I/O control, file, data and memory management, and communication control as well as related services.

In embodiments, and in terms of hardware architecture, the system 100 further include one or more input and/or output (I/O) devices 145, 150, 155 (or peripherals) communicatively coupled via a local input/output controller 135. The I/O devices notably includes an antenna 112, to communicate with the sensors 30 - 34 and vehicles 20. The input/output controller 135 can comprise or connect to one or more buses 140 or other wired or wireless connections. The I/O controller 135 may have additional elements, which are omitted for simplicity, such as controllers, buffers (caches), drivers, and receivers, etc., to enable communications. Further, a local interface may include address, control, and/or data connections to enable appropriate communications among the aforementioned components.

Possibly, a conventional keyboard and mouse can be coupled to the input/output controller 135. I/O devices 145 - 155 may include other hardware devices, which communicate both inputs and outputs. The system 100 may further include a display controller 125 coupled to a display 130. In exemplary embodiments, the system 100 may further include a network interface 160 or transceiver for coupling to a network (not shown).

The methods described herein shall typically be, at least partly, in the form of executable program, script, or, more generally, executable instructions. In operation, one or more of the processing elements 105 execute software stored within the memory 110 (separate memory elements may possibly be dedicated to each processing element), to communicate data to and from the memory 110, and to generally control operations pursuant to software instructions. The methods described herein, in whole or in part are read by one or more of the processing elements 105, typically buffered therein, and then executed. When the methods described herein are implemented in software, the methods can be stored on any computer readable medium for use by or in connection with any computer related system or method.

Computer readable program instructions described herein can be downloaded to processing elements 105 from a computer readable storage medium, via a network, for example, the Internet and/or a wireless network. A network adapter card or network interface 160 in the device may receive the computer readable program instructions from the network and forwards the program instructions for storage in a computer readable storage medium 120 interfaced with the processing elements.

A computer program product may include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium may for example be an electronic storage device, a magnetic storage device, an optical or electromagnetic storage device, a semiconductor storage device, or any suitable combination of the foregoing. Examples of such storage media include: a hard disk, a random-access memory (RAM), a static random-access memory (SRAM), an erasable programmable read-only memory (EPROM or Flash memory), a memory stick, and any suitable combination of the foregoing.

A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fibre-optic cable), or electrical signals transmitted through a wire.

### 2.2 Preferred automated vehicle architecture

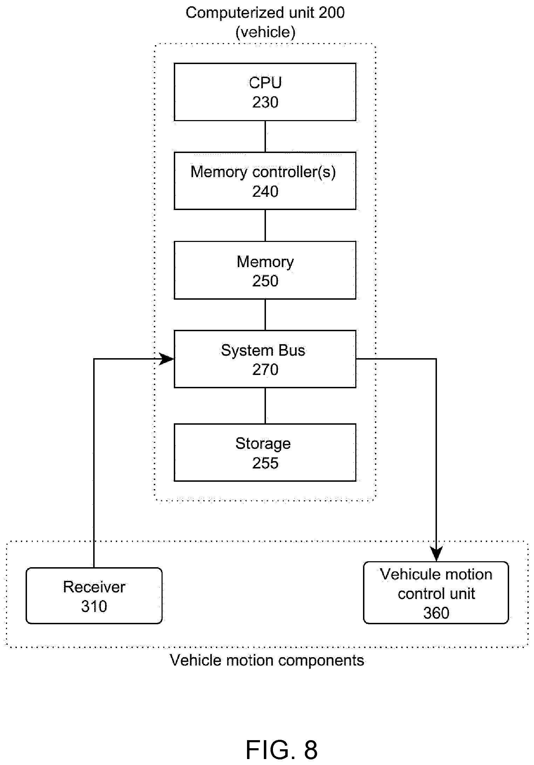

Step S19 is performed by the vehicles 20. FIG. 8 is a functional diagram showing computerized components of a vehicle 20, wherein such components interact to perform step 19 as described earlier in reference to FIG. 6. In the example of FIG. 8, the vehicle 20 comprises a computerized unit 200, which interacts with vehicle motion components, which notably includes a radio receiver 310. The vehicle 20 may optionally include sensors, should the vehicle be configured as an autonomous vehicle. This, however, is typically not the case in the present context. The architecture of the computerized unit 200 is similar to that of the CCU 100. It includes a processor 230 and a memory 250 coupled to one or memory controllers 240. The processor 230 is a hardware device for executing software, as e.g., loaded in a main memory 250 of the unit 200. The processor 230 is typically a central processing unit (CPU), i.e., a custom made or commercially available processor. The unit further includes storage means 255, notably storing methods in the form of software, meant to be loaded in the memory 250 and executed by the CPU.

The system bus 270 transmits data throughout the computer unit 200, from and to the connected devices, e.g., the radio receiver 310, which wirelessly receives data from the CCU 100 (via the antenna 112), and the vehicle motion control unit 360, which includes a drive by wire (DbW) system. In operation, the computerized unit 200 instructs the control unit 360 to operate the vehicle 20 in a partly autonomous or automated manner, based on signals produced in accordance with instructions received via the receiver 310.

### 2.3 Preferred sensor robot architecture

Steps S12 - S15 are performed by the sensor robots. As in FIG. 7 and 8, the computer architecture 300 of the sensor robots 30 - 34 include processing means 305, memory 320, and one or more memory controllers 310. The system bus 330 coordinate data flows throughout the robot components described earlier in reference to FIGS. 3A - 3C, i.e., the four electrical motors 34m (via a dedicated control unit 360), the Lidar sensor 36 (via the respective processing unit 37), the GPS antenna 39 (via the GPS processing unit 340), and the antenna 35 (via the radio transceiver 370, possibly a mere receiver). Again, the computerized unit 300 includes storage means 350, storing methods in the form of software, meant to be loaded in the memory 320 and executed by the main processing unit 305, to operate the sensor robot in accordance with embodiments described in Sect. 1.

### 3. Final remarks

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. Such program instructions may also be stored in a computer readable storage medium.

The flowchart and the block diagram in the accompanying drawings illustrate the architecture, functionality, and operation of possible implementations of computerized systems, methods of operating it, and computer program products according to various embodiments of the present invention.

Each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in a reverse order, depending on the functions involved and the algorithm optimization used. Furthermore, each block and combinations thereof can also be adequately distributed through special-purpose hardware components.

While the present invention has been described with reference to a limited number of embodiments, variants, and the accompanying drawings, it will be understood by those skilled in the art that various changes may be made, and equivalents may be substituted without departing from the scope of the present invention as claimed in the appended claims. For example, the robots 30 - 34 may have a different design, e.g., based on a different type of wheel.

## Claims

1. A method of enabling the steering of automated vehicles (20) in a designated area (10), the method comprising
instructing to move (S13) one or more movable sensors (30 - 34) across the designated area for the movable sensors to sense (S14) at least a part of the designated area and generate corresponding detection signals,
**characterized in that** the method further comprises:
updating (S16), based on the generated detection signals, a configuration of the designated area, wherein the configuration include a list of objects and their respective positions in the designated area, the objects including the automated vehicles;
planning (S17), based on the updated configuration, one or more vehicle trajectories for one or more vehicles of the automated vehicles, respectively, from one or more current positions of the one or more vehicles to one or more destination positions for the one or more vehicles, respectively, in the designated area, the planned vehicle trajectories being free of collision with said objects; and
transmitting (S18) the one or more planned vehicle trajectories to said one or more vehicles, respectively, to allow the latter to automatically drive to the one or more respective destination positions.

2. The method according to claim **1,** wherein
the one or more movable sensors are one or more robots (30 - 34) designed as ground vehicles, respectively, and
instructing to move the one or more movable sensors comprises instructing the one or more robots to drive along one or more paths, for the robots to sense said at least a part of the designated area and generate the corresponding detection signals.

3. The method according to claim **2,** wherein
the one or more robots are instructed to drive along said one or more paths up to one or more target positions, respectively, for the one or more robots to sense said at least a part of the designated area at the one or more target positions, respectively.

4. The method according to claim **2** or **3,** wherein
the one or more robots are instructed to drive along said one or more paths, for the one or more robots to sense the designated area along said one or more paths, respectively.

5. The method according to any one of claim **2** to **4,** wherein the method further comprises, prior to instructing to move the one or more movable sensors,
determining the one or more paths according to a logistics goal, which is preferably devised based on last known positions of the automated vehicles, and
transmitting the one or more paths determined to the one or more robots.

6. The method according to any one of claim **2** to **5,** wherein the method further comprises:
identifying features that include vehicle features of the automated vehicles, based on the generated detection signals, whereby said configuration is updated based on the identified features.

7. The method according to claim **6,** wherein
the vehicle features include underside features corresponding to underbodies of the automated vehicles, including wheels of the automated vehicles, and
updating said configuration comprises determining positions of the automated vehicles based on positions determined from the underside features identified.

8. The method according to any one of claims **2** to 7, wherein
the one or more robots have a form factor allowing them to pass under frames of the automated vehicles, and
at least one of the one or more paths is a path going under a frame of one or more of the automated vehicles, whereby instructing to move the one or more movable sensors causes at least one of the one or more robots to drive under said frame.

9. The method according to any one of claims **2** to **8,** wherein planning the vehicle trajectories comprises
determining vehicle motion paths for the automated vehicles to reach their destination positions; and
orchestrating motions of the vehicle along the determined motion paths to obtain the one or more vehicle trajectories, wherein said vehicle motions are preferably orchestrated for the resulting vehicle trajectories to be at least partly concomitant.

10. The method according to any one of claims **2** to **9,**
the designated area includes a parking lot, which preferably includes more than 100 parking places,
both the destination positions and the current positions of the automated vehicles correspond to respective parking places of the parking lot, and
the robots are preferably dimensioned so as to be able to drive between vehicles as parked in parallel ones of the parking places according to nominal parking positions.

11. The method according to any one of claims **1** to **10,** wherein
said configuration of the designated area is updated at a central control unit, and
said vehicle trajectories are planned at the central control unit.

12. The method according to any one of claims **1** to **11,** wherein the method further comprises, while the automated vehicles automatically drive to the destination positions:
repeatedly updating said configuration of the designated area, based on detection signals continually generated by the one or more movable sensors while the automated vehicles automatically drive to the destination positions; and
checking for potential collisions between the automated vehicles and objects of the list of objects, based on the repeatedly updated configuration.

13. The method according to any one of claims **1** to **12,** wherein
said objects include the one or more vehicles and the one or more movable sensors, and
the respective positions are preferably 2D positions in the designated area.

14. A system for enabling the steering of automated vehicles in a designated area, the system comprising:
movable sensors, and
a central control unit, which is configured to:
instruct to move one or more movable sensors across the designated area for the movable sensors to sense at least a part of the designated area and generate corresponding detection signals;
update, based on the generated detection signals, a configuration of the designated area, wherein the configuration include a list of objects and their respective positions in the designated area, the objects including the automated vehicles;
plan, based on the updated configuration, one or more vehicle trajectories for one or more vehicles of the automated vehicles, respectively, from one or more current positions of the one or more vehicles to one or more destination positions for the one or more vehicles, respectively, in the designated area, the planned vehicle trajectories being free of collision with said objects; and
instruct to transmit the one or more planned vehicle trajectories to said one or more vehicles, respectively, to allow the latter to automatically drive to the one or more destination positions.

15. The system according to claim **14,** wherein
the movable sensors are robots designed as ground vehicles, which are configured to drive along respective one or more paths across the designated area, and
the ground vehicles preferably are at least partly autonomous.

16. The system according to claim **15,** wherein
the robots have a form factor allowing them to go under frames of the automated vehicles.

17. The system according to claim **15** or **16,** wherein
the robots are designed as holonomic drive systems.

18. The system according to claim **17,** wherein
each robot of the one or more robots has a chassis supporting:
one or more batteries;
four electrical motors powered by the one or more batteries;
four omnidirectional wheels coupled to respective ones of the electrical motors;
a Lidar sensor mounted on top of the chassis;
a GPS antenna;
processing means, which include a main processing unit, a Lidar processing unit connected to the lidar sensor, and a GPS processing unit connected to the GPS antenna; and
a radio receiver with an antenna for wireless data communication with the central control unit, wherein the radio receiver is connected to the main processing unit.

19. The system according to any one of claims **15** to **18,**
a maximal lateral dimension of each of the robots is between 200 mm and 500 mm, and a vertical dimension of each of the robots is between 60 and 150 mm.

20. A computer program product for enabling the steering of automated vehicles in a designated area, the computer program product comprising a computer readable storage medium having program instructions embodied therewith, the program instructions executable by processing means of one or more computerized units to cause the one or more computerized units to:
instruct to move one or more movable sensors across the designated area for the movable sensors to sense at least a part of the designated area and generate corresponding detection signals;
update, based on the generated detection signals, a configuration of the designated area, wherein the configuration include a list of objects and their respective positions in the designated area, the objects including the automated vehicles;
plan, based on the updated configuration, one or more vehicle trajectories for one or more vehicles of the automated vehicles, respectively, from one or more current positions of the one or more vehicles to one or more destination positions for the one or more vehicles, respectively, in the designated area, the planned vehicle trajectories being free of collision with said objects; and
instruct to transmit the one or more vehicle trajectories planned to respective ones of the automated vehicles for the latter to automatically drive to the one or more destination positions.

## Patentansprüche

1. Ein Verfahren zur Steuerung von automatisierten Fahrzeugen (20) in einem festgelegten Bereich (10), wobei das Verfahren umfasst
Anweisen, einen oder mehrere bewegliche Sensoren (30 - 34) im festgelegten Bereich zu bewegen (S13), damit die beweglichen Sensoren mindestens einen Teil des festgelegten Bereichs erfassen (S14) und entsprechende Erkennungssignale erzeugen,
**dadurch gekennzeichnet, dass** das Verfahren weiter umfasst:
Aktualisieren (S16) einer Konfiguration des festgelegten Bereichs auf der Grundlage der erzeugten Erkennungssignale, wobei die Konfiguration eine Liste von Objekten und deren jeweilige Positionen im festgelegten Bereich umfasst, wobei die Objekte die automatisierten Fahrzeuge umfassen;
Planen (S17), basierend auf der aktualisierten Konfiguration, einer oder mehrerer Fahrzeugbahnen für eines oder mehrere der automatisierten Fahrzeuge, jeweils von einer oder mehreren aktuellen Positionen des einen oder der mehreren Fahrzeuge zu einer oder mehreren Zielpositionen für das eine oder die mehreren Fahrzeuge, jeweils im festgelegten Bereich, wobei die geplanten Fahrzeugbahnen frei von Kollisionen mit den Objekten sind; und
Übertragen (S18) der einen oder mehreren geplanten Fahrzeugbahnen jeweils an das eine oder die mehreren Fahrzeuge, um zu ermöglichen, automatisch zu der einen oder den mehreren jeweiligen Zielpositionen zu fahren.

2. Das Verfahren nach Anspruch **1,** wobei
der eine oder die mehreren beweglichen Sensoren ein oder mehrere Roboter (30 - 34) sind, die jeweils als Bodenfahrzeuge ausgelegt sind, und
das Anweisen, den einen oder die mehreren beweglichen Sensoren zu bewegen, die Anweisung an den einen oder die mehreren Roboter umfasst, entlang eines oder mehrerer Bahnen zu fahren, damit die Roboter den mindestens einen Teil des festgelegten Bereichs erfassen und die entsprechenden Erfassungssignale erzeugen können.

3. Das Verfahren nach Anspruch **2,** wobei
der eine oder die mehreren Roboter angewiesen werden, entlang des einen oder der mehreren Bahnen jeweils zu einer oder mehreren Zielpositionen zu fahren, damit der eine oder die mehreren Roboter jeweils mindestens einen Teil des festgelegten Bereichs an der einen oder den mehreren Zielpositionen erfassen.

4. Das Verfahren nach Anspruch **2** oder **3,** wobei
der eine oder die mehreren Roboter angewiesen werden, entlang des einen oder der mehreren Bahnen zu fahren, damit der eine oder die mehreren Roboter den ausgewiesenen Bereich entlang des einen oder der mehreren Bahnen jeweils erfassen.

5. Das Verfahren nach einem der Ansprüche **2** bis **4,** wobei das Verfahren vor der Anweisung an den einen oder die mehreren beweglichen Sensoren, sich zu bewegen, weiter umfasst
das Bestimmen des einen oder der mehreren Bahnen gemäß einem Logistikziel, das vorzugsweise auf der Grundlage der letzten bekannten Positionen der automatisierten Fahrzeuge festgelegt wird, und
das Übertragen der einen oder mehreren bestimmten Bahnen an den einen oder die mehreren Roboter.

6. Das Verfahren nach einem der Ansprüche **2** bis **5,** wobei das Verfahren weiter umfasst:
Identifizieren von Merkmalen, die Fahrzeugmerkmale der automatisierten Fahrzeuge umfassen, basierend auf den erzeugten Erkennungssignalen, wobei die Konfiguration basierend auf den identifizierten Merkmalen aktualisiert wird.

7. Das Verfahren nach Anspruch **6,** wobei
die Fahrzeugmerkmale Unterbodenmerkmale umfassen, die den Unterböden der automatisierten Fahrzeuge entsprechen, einschließlich der Räder der automatisierten Fahrzeuge, und
das Aktualisieren der Konfiguration das Bestimmen von Positionen der automatisierten Fahrzeuge auf der Grundlage von Positionen umfasst, die aus den identifizierten Unterbodenmerkmalen bestimmt werden.

8. Das Verfahren nach einem der Ansprüche **2** bis **7,** wobei
der eine oder die mehreren Roboter eine Form haben, die es ihnen ermöglicht, unter Rahmen der automatisierten Fahrzeuge hindurchzufahren, und
mindestens einer der einen oder mehreren Bahnen eine Bahn ist, die unter einem Rahmen eines oder mehrerer der automatisierten Fahrzeuge verläuft, wobei die Anweisung, den einen oder die mehreren beweglichen Sensoren zu bewegen, bewirkt, dass mindestens einer der einen oder mehreren Roboter unter den Rahmen fährt.

9. Das Verfahren nach einem der Ansprüche **2** bis **8,** wobei das Planen der Fahrzeugbahnen umfasst
das Bestimmen von Fahrzeugbewegungswegen für die automatisierten Fahrzeuge, um ihre Zielpositionen zu erreichen; und
das Koordinieren der Bewegungen des Fahrzeugs entlang der bestimmten Bewegungsbahnen, um die eine oder mehreren Fahrzeugbahnen zu erhalten, wobei die Fahrzeugbewegungen vorzugsweise so koordiniert werden, dass die resultierenden Fahrzeugbahnen zumindest teilweise übereinstimmen.

10. Das Verfahren nach einem der Ansprüche **2** bis **9,** wobei
der ausgewiesene Bereich einen Parkplatz umfasst, der vorzugsweise mehr als 100 Parkplätze umfasst,
sowohl die Zielpositionen als auch die aktuellen Positionen der automatisierten Fahrzeuge den jeweiligen Parkplätzen des Parkplatzes entsprechen und
die Roboter vorzugsweise so dimensioniert sind, dass sie zwischen Fahrzeugen fahren können, die gemäß den nominalen Parkpositionen parallel auf den Parkplätzen geparkt sind.

11. Das Verfahren nach einem der Ansprüche **1** bis **10,** wobei
die Konfiguration des ausgewiesenen Bereichs in einer zentralen Steuereinheit aktualisiert wird und
die Fahrzeugbahnen an der zentralen Steuereinheit geplant werden.

12. Das Verfahren nach einem der Ansprüche **1** bis **11,** wobei, während die automatisierten Fahrzeuge automatisch zu den Zielpositionen fahren, das Verfahren weiter umfasst:
wiederholtes Aktualisieren der Konfiguration des festgelegten Bereichs auf der Grundlage von Erfassungssignalen, die kontinuierlich von dem einen oder den mehreren beweglichen Sensoren erzeugt werden, während die automatisierten Fahrzeuge automatisch zu den Zielpositionen fahren; und
Überprüfen auf potenzielle Kollisionen zwischen den automatisierten Fahrzeugen und Objekten der Liste von Objekten auf der Grundlage der wiederholt aktualisierten Konfiguration.

13. Das Verfahren nach einem der Ansprüche **1** bis **12,** wobei
die Objekte das eine oder die mehreren Fahrzeuge und das eine oder die mehreren beweglichen Sensoren umfassen und
die jeweiligen Positionen vorzugsweise 2D-Positionen in dem festgelegten Bereich sind.

14. Ein System zum Ermöglichen der Lenkung automatisierter Fahrzeuge in einem festgelegten Bereich, wobei das System umfasst:
bewegliche Sensoren und
eine zentrale Steuereinheit, die so konfiguriert ist, dass sie:
anweist, einen oder mehrere bewegliche Sensoren im festgelegten Bereich zu bewegen, damit die beweglichen Sensoren mindestens einen Teil des festgelegten Bereichs erfassen und entsprechende Erkennungssignale erzeugen;
eine Konfiguration des festgelegten Bereichs auf der Grundlage der erzeugten Erkennungssignale aktualisiert, wobei die Konfiguration eine Liste von Objekten und deren jeweilige Positionen im festgelegten Bereich umfasst, wobei die Objekte die automatisierten Fahrzeuge umfassen;
eine oder mehrere Fahrzeugbahnen für eines oder mehrere der automatisierten Fahrzeuge auf der Grundlage der aktualisierten Konfiguration plant, jeweils von einer oder mehreren aktuellen Positionen des einen oder der mehreren Fahrzeuge zu einer oder mehreren Zielpositionen für das eine oder die mehreren Fahrzeuge im festgelegten Bereich, wobei die geplanten Fahrzeugbahnen frei von Kollisionen mit den Objekten sind; und
anweist, die eine oder mehreren geplanten Fahrzeugbahnen an das eine oder die mehreren Fahrzeuge zu übertragen, damit diese automatisch zu der einen oder den mehreren Zielpositionen fahren können.

15. Ein System nach Anspruch **14,** wobei
die beweglichen Sensoren als Bodenfahrzeuge konzipierte Roboter sind, die so konfiguriert sind, dass sie entlang jeweils eines oder mehrerer Bahnen über den festgelegten Bereich fahren, und
die Bodenfahrzeuge vorzugsweise zumindest teilweise autonom sind.

16. Das System nach Anspruch **15,** wobei
die Roboter eine Form haben, die es ihnen ermöglicht, unter die Rahmen der automatisierten Fahrzeuge zu fahren.

17. Das System nach Anspruch **15** oder **16,** wobei
die Roboter als holonome Antriebssysteme ausgelegt sind.

18. Das System nach Anspruch **17,** wobei
jeder Roboter der einen oder mehreren Roboter ein Chassis aufweist, das Folgendes trägt:
eine oder mehrere Batterien;
vier Elektromotoren, die von der einen oder den mehreren Batterien angetrieben werden;
vier omnidirektionale Räder, die mit den jeweiligen Elektromotoren gekoppelt sind;
ein Lidar-Sensor, der oben auf dem Fahrgestell angebracht ist;
eine GPS-Antenne;
Verarbeitungsmittel, die eine Hauptverarbeitungseinheit, eine mit dem Lidar-Sensor verbundene Lidar-Verarbeitungseinheit und eine mit der GPS-Antenne verbundene GPS-Verarbeitungseinheit umfassen; und
einen Funkempfänger mit einer Antenne für die drahtlose Datenkommunikation mit der zentralen Steuereinheit, wobei der Funkempfänger mit der Hauptverarbeitungseinheit verbunden ist.

19. Das System nach einem der Ansprüche **15** bis **18,** wobei
eine maximale seitliche Abmessung jedes der Roboter zwischen 200 mm und 500 mm liegt und
eine vertikale Abmessung jedes der Roboter zwischen 60 und 150 mm liegt.

20. Ein Computerprogrammprodukt zum Ermöglichen der Steuerung automatisierter Fahrzeuge in einem festgelegten Bereich, wobei das Computerprogrammprodukt ein computerlesbares Speichermedium mit darauf gespeicherten Programmbefehlen umfasst, wobei die Programmbefehle durch Verarbeitungseinrichtungen einer oder mehrerer computergestützter Einheiten ausführbar sind, um die eine oder mehreren computergestützten Einheiten zu veranlassen:
anzuweisen, einen oder mehrere bewegliche Sensoren über den festgelegten Bereich zu bewegen, damit die beweglichen Sensoren mindestens einen Teil des festgelegten Bereichs erfassen und entsprechende Erkennungssignale erzeugen;
basierend auf den erzeugten Erkennungssignalen eine Konfiguration des festgelegten Bereichs zu aktualisieren, wobei die Konfiguration eine Liste von Objekten und deren jeweilige Positionen im festgelegten Bereich umfasst, wobei die Objekte die automatisierten Fahrzeuge umfassen;
auf der Grundlage der aktualisierten Konfiguration eine oder mehrere Fahrzeugbahnen für jeweils eines oder mehrere der automatisierten Fahrzeuge von einer oder mehreren aktuellen Positionen des einen oder der mehreren Fahrzeuge zu einer oder mehreren Zielpositionen für das eine oder die mehreren Fahrzeuge im festgelegten Bereich zu planen, wobei die geplanten Fahrzeugbahnen frei von Kollisionen mit den Objekten sind; und
anzuweisen, die einen oder mehreren geplanten Fahrzeugbahnen an die jeweiligen automatisierten Fahrzeuge zu übertragen, damit diese automatisch zu den einen oder mehreren Zielpositionen fahren.

## Revendications

1. Procédé permettant la conduite de véhicules automatisés (20) dans une zone désignée (10), le procédé comprenant
donner l'instruction (S13) de déplacer un ou plusieurs capteurs mobiles (30 - 34) à travers la zone désignée afin que les capteurs mobiles détectent (S14) au moins une partie de la zone désignée et génèrent des signaux de détection correspondants,
**caractérisé en ce que** le procédé comprend en outre :
mettre à jour (S16), sur la base des signaux de détection générés, une configuration de la zone désignée, dans lequel la configuration comprend une liste d'objets et leurs positions respectives dans la zone désignée, les objets comprenant les véhicules automatisés ;
planifier (S17), sur la base de la configuration mise à jour, une ou plusieurs trajectoires de véhicule pour un ou plusieurs véhicules des véhicules automatisés, respectivement, depuis une ou plusieurs positions actuelles desdits un ou plusieurs véhicules vers une ou plusieurs positions de destination pour lesdits un ou plusieurs véhicules, respectivement, dans la zone désignée, les trajectoires de véhicule planifiées étant exemptes de collision avec lesdits objets ; et
transmettre (S18) lesdites une ou plusieurs trajectoires de véhicule planifiées auxdits un ou plusieurs véhicules, respectivement, afin de permettre à ces derniers de se rendre automatiquement auxdites positions de destination respectives.

2. Procédé selon la revendication **1,** dans lequel
lesdits un ou plusieurs capteurs mobiles sont un ou plusieurs robots (30 à 34) conçus respectivement comme des véhicules terrestres, et
donner l'instruction de déplacer lesdits un ou plusieurs capteurs mobiles comprend donner l'instruction auxdits un ou plusieurs robots de se déplacer le long d'un ou plusieurs chemins, afin que les robots détectent ladite au moins une partie de la zone désignée et génèrent les signaux de détection correspondants.

3. Procédé selon la revendication **2,** dans lequel
lesdits un ou plusieurs robots reçoivent l'instruction de se déplacer le long desdits un ou plusieurs chemins jusqu'à une ou plusieurs positions cibles, respectivement, afin que lesdits un ou plusieurs robots détectent ladite au moins une partie de la zone désignée auxdites une ou plusieurs positions cibles, respectivement.

4. Procédé selon la revendication **2** ou **3,** dans lequel
lesdits un ou plusieurs robots reçoivent l'instruction de se déplacer le long desdits un ou plusieurs chemins, afin que lesdits un ou plusieurs robots détectent la zone désignée le long respectivement desdits un ou plusieurs chemins.

5. Procédé selon l'une quelconque des revendications **2** à **4,** dans lequel le procédé comprend en outre, avant de donner l'instruction de déplacer lesdits un ou plusieurs capteurs mobiles,
la détermination d'un ou plusieurs chemins en fonction d'un objectif logistique, qui est de préférence conçu sur la base des dernières positions connues des véhicules automatisés, et
la transmission desdits un ou plusieurs chemins déterminés auxdits un ou plusieurs robots.

6. Procédé selon l'une quelconque des revendications **2** à **5,** dans lequel le procédé comprend en outre :
l'identification de caractéristiques qui comprennent des caractéristiques de véhicule des véhicules automatisés, sur la base des signaux de détection générés, ladite configuration étant mise à jour sur la base des caractéristiques identifiées.

7. Procédé selon la revendication **6,** dans lequel
les caractéristiques de véhicule comprennent des caractéristiques de partie inférieure correspondant aux dessous de caisse des véhicules automatisés, y compris des roues des véhicules automatisés, et
mettre à jour ladite configuration comprend la détermination de positions des véhicules automatisés sur la base des positions déterminées à partir des caractéristiques de partie inférieure identifiées.

8. Procédé selon l'une quelconque des revendications **2** à **7,** dans lequel
lesdits un ou plusieurs robots ont une forme leur permettant de passer sous des châssis des véhicules automatisés, et
au moins l'un desdits un ou plusieurs chemins est un chemin passant sous un châssis d'un ou plusieurs des véhicules automatisés, moyennant quoi donner l'instruction de déplacer lesdits un ou plusieurs capteurs mobiles amène au moins l'un desdits un ou plusieurs robots à passer sous ledit châssis.

9. Procédé selon l'une quelconque des revendications **2** à **8,** dans lequel planifier les trajectoires de véhicules comprend
déterminer des chemins de mouvement de véhicule pour que les véhicules automatisés atteignent leurs positions de destination ; et
orchestrer des mouvements des véhicules le long des chemins de mouvement déterminés afin d'obtenir lesdites une ou plusieurs trajectoires du véhicule, dans lequel lesdits mouvements de véhicule sont de préférence orchestrés de manière à ce que les trajectoires de véhicule résultantes soient au moins partiellement concomitantes.

10. Procédé selon l'une quelconque des revendications **2** à **9,**
la zone désignée comprend un parking, qui comprend de préférence plus de 100 places de stationnement,
les positions de destination et les positions actuelles des véhicules automatisés correspondent respectivement à des places de stationnement du parking, et
les robots sont de préférence dimensionnés de manière à pouvoir circuler entre des véhicules garés sur des places de stationnement parallèles selon des positions de stationnement nominales.

11. Procédé selon l'une quelconque des revendications **1** à **10,** dans lequel
ladite configuration de la zone désignée est mise à jour au niveau d'une unité de commande centrale, et
lesdites trajectoires de véhicules sont planifiées au niveau de l'unité de commande centrale.

12. Procédé selon l'une quelconque des revendications **1** à **11,** dans lequel le procédé comprend en outre, tandis que les véhicules automatisés se déplacent automatiquement vers les positions de destination :
mettre à jour de manière répétée ladite configuration de la zone désignée, sur la base des signaux de détection continument générés par lesdits un ou plusieurs capteurs mobiles pendant que les véhicules automatisés se dirigent automatiquement vers les positions de destination ; et
vérifier des collisions potentielles entre les véhicules automatisés et les objets de la liste d'objets, sur la base de la configuration mise à jour de manière répétée.

13. Procédé selon l'une quelconque des revendications **1** à **12,** dans lequel
lesdits objets comprennent lesdits un ou plusieurs véhicules et lesdits un ou plusieurs capteurs mobiles, et
les positions respectives sont de préférence des positions 2D dans la zone désignée.

14. Système permettant la conduite de véhicules automatisés dans une zone désignée, le système comprenant :
des capteurs mobiles, et
une unité de commande centrale, qui est configurée pour :
donner l'instruction de déplacer un ou plusieurs capteurs mobiles à travers la zone désignée afin que les capteurs mobiles détectent au moins une partie de la zone désignée et génèrent des signaux de détection correspondants ;
mettre à jour, sur la base des signaux de détection générés, une configuration de la zone désignée, dans laquelle la configuration comprend une liste d'objets et leurs positions respectives dans la zone désignée, les objets comprenant les véhicules automatisés ;
planifier, sur la base de la configuration mise à jour, une ou plusieurs trajectoires de véhicule pour un ou plusieurs véhicules parmi les véhicules automatisés, respectivement, depuis une ou plusieurs positions actuelles desdits un ou plusieurs véhicules vers une ou plusieurs positions de destination pour lesdits un ou plusieurs véhicules, respectivement, dans la zone désignée, les trajectoires de véhicule planifiées étant exemptes de collision avec lesdits objets ; et
donner l'instruction de transmettre lesdites une ou plusieurs trajectoires de véhicule planifiées auxdits un ou plusieurs véhicules, respectivement, afin de permettre à ces derniers de se rendre automatiquement auxdites une ou plusieurs positions de destination.

15. Système selon la revendication **14,** dans lequel
les capteurs mobiles sont des robots conçus comme des véhicules terrestres, qui sont configurés pour rouler le long d'un ou plusieurs chemins respectifs à travers la zone désignée, et
les véhicules terrestres sont de préférence au moins partiellement autonomes.

16. Système selon la revendication **15,** dans lequel
les robots ont une forme leur permettant de passer sous des châssis des véhicules automatisés.

17. Système selon la revendication **15** ou **16,** dans lequel
les robots sont conçus comme des systèmes d'entraînement holonomiques.

18. Système selon la revendication **17,** dans lequel
chaque robot desdits un ou plusieurs robots comporte un châssis supportant :
une ou plusieurs batteries ;
quatre moteurs électriques alimentés par lesdites une ou plusieurs batteries ;
quatre roues omnidirectionnelles couplées à des moteurs électriques respectifs ;
un capteur Lidar monté sur le dessus du châssis ;
une antenne GPS ;
des moyens de traitement, qui comprennent une unité de traitement principale, une unité de traitement Lidar connectée au capteur Lidar et une unité de traitement GPS connectée à l'antenne GPS ; et
un récepteur radio avec une antenne pour communication de données sans fil avec l'unité de commande centrale, dans lequel le récepteur radio est connecté à l'unité de traitement principale.

19. Le système selon l'une quelconque des revendications **15** à **18,** dans lequel
une dimension latérale maximale de chacun des robots est comprise entre 200 mm et 500 mm, et
une dimension verticale de chacun des robots est comprise entre 60 et 150 mm.

20. Produit logiciel permettant de diriger des véhicules automatisés dans une zone désignée, le produit logiciel comprenant un support de stockage lisible par ordinateur sur lequel sont enregistrées des instructions de programme, les instructions de programme pouvant être exécutées par un ou plusieurs moyens de traitement d'une ou plusieurs unités informatisées afin d'amener lesdites une ou plusieurs unités informatisées à :
donner l'instruction de déplacer un ou plusieurs capteurs mobiles à travers la zone désignée afin que les capteurs mobiles détectent au moins une partie de la zone désignée et génèrent des signaux de détection correspondants ;
mettre à jour, sur la base des signaux de détection générés, une configuration de la zone désignée, dans laquelle la configuration comprend une liste d'objets et leurs positions respectives dans la zone désignée, les objets comprenant les véhicules automatisés ;
planifier, sur la base de la configuration mise à jour, une ou plusieurs trajectoires de véhicule pour un ou plusieurs véhicules parmi les véhicules automatisés, respectivement, depuis une ou plusieurs positions actuelles desdits un ou plusieurs véhicules vers une ou plusieurs positions de destination pour lesdits un ou plusieurs véhicules, respectivement, dans la zone désignée, les trajectoires de véhicule planifiées étant exemptes de collision avec lesdits objets ; et
donner l'instruction de transmettre lesdites une ou plusieurs trajectoires de véhicule planifiées aux véhicules automatisés respectifs afin que ces derniers se rendent automatiquement auxdites une ou plusieurs positions de destination.
